# EUROPEAN PATENT APPLICATION

(11) **EP 2 474 753 A2**
(43) Date of publication of application: **11.07.2012**
(21) Application number: 12150354.4
(22) Date of filing: 06.01.2012
(51) Int. Cl.: F16D 55/28, B66D 5/14

(54) **Electromagnetic brake, rotating electrical machine, and elevator**

(30) Priority: 07.01.2011 JP 2011002016
(71) Applicant: Kabushiki Kaisha Yaskawa Denki, Kitakyushu-shi, Fukuoka 806-0004 (JP)
(72) Inventor: Tsumagari, Hiroshi, Kitakyushu-Shi, Fukuoka 806-0004 (JP); Otake, Kenichi, Kitakyushu-Shi, Fukuoka 806-0004 (JP); Nishi, Shinichi, Kitakyushu-Shi, Fukuoka 806-0004 (JP); Matsuo, Tomohiro, Kitakyushu-Shi, Fukuoka 806-0004 (JP)
(74) Representative: Gendron, Vincent Christian

(57) **Abstract**

An electromagnetic brake (200) includes a brake plate (202), two pressing members (203a, 203b) that press the
brake plate (202) when braking is performed on the brake plate (202), a compression coil spring (208a, 208b) that urges the two pressing members (203a, 203b) in such a manner that the brake plate (202) is pressed, and an electromagnetic coil (207) that moves the two pressing members (203a, 203b) in a direction that is opposite to a direction of an urging force of the compressing coil spring (208a, 208b) when braking is not being performed on the brake plate (202). The compressing coil spring (208a, 208b) urges the two pressing members (203a, 203b) in such a manner that the magnitudes of pressing forces of the two pressing members (203a, 203b) are made to be different from each other.

## Description

### BACKGROUND OF THE INVENTION

### 1. Field of the Invention

The present invention relates to electromagnetic brakes, rotating electrical machines, and elevators.

### 2. Description of the Related Art

An electromagnetic brake including a pressing member and a brake plate has been heretofore known (see Japanese Unexamined Patent Application Publication No. 9-144778, for example).

Japanese Unexamined Patent Application Publication No. 9-144778 discloses an electromagnetic brake that performs braking that acts against the rotation or driving of a shaft body of a motor. The electromagnetic brake includes a brake hub (brake plate) that is rotated along with the shaft body of the motor, a stator containing an electromagnetic coil that is disposed so as to face the surface of the brake hub, and a single armature (pressing member) that is disposed between the stator and the brake hub and that performs braking that acts against the rotation of the brake hub. The electromagnetic brake also includes a torque spring that is disposed on the outer peripheral side of the stator and that presses the single armature against the brake hub.

In the electromagnetic brake described in Japanese Unexamined Patent Application Publication No. 9-144778, the urging force of the torque spring presses the single armature against (pushes the single armature onto) the brake hub when a predetermined voltage is not applied to the electromagnetic coil mounted in the stator. Accordingly, braking is performed against the rotation of the brake hub, and the rotation of the shaft body of the motor is thus stopped. On the other hand, when a predetermined voltage is applied to the electromagnetic coil mounted in the stator, an electromagnetic force generated by the electromagnetic coil attracts the single armature so that the single armature moves in a direction that is opposite to that of the urging force of the torque spring (in a direction to separate from the brake hub). Accordingly, braking is no longer performed on the brake hub and thus the brake hub (the shaft body of the motor) is allowed to rotate.

The electromagnetic brake described in Japanese Unexamined Patent Application Publication No. 9-144778, however, has a problem in that, if a single armature (pressing member) that performs braking against the rotation of the brake hub is broken due to wear or other reasons, the single armature has difficulty in performing braking that acts against the rotation of the brake hub (brake plate).

### SUMMARY OF THE INVENTION

The disclosure is made to solve the above problem, and an object of the disclosure is to provide an electromagnetic brake, a rotating electrical machine, and an elevator that allow a pressing member to reliably perform braking that acts against the rotation of a brake plate.

In order to achieve the above object, an electromagnetic brake according to a first aspect of the disclosure includes a brake plate that rotates along with a rotor on which braking is performed, a plurality of pressing members that press the brake plate when braking is performed on the brake plate, an urging member that urges the plurality of pressing members in such a manner that the brake plate is pressed, and an electromagnetic coil that moves the plurality of pressing members in a direction that is opposite to a direction of the urging force of the urging member when braking is not being performed on the brake plate. In the electromagnetic brake, the urging member is provided to urge the plurality of pressing members in such a manner that the magnitudes of pressing forces of at least two of the plurality of pressing members are made to be different from each other.

As described above, the electromagnetic brake according to the first aspect includes multiple pressing members that press the brake plate so that braking is performed on the brake plate. Thus, even when one of the multiple pressing members is broken, the other unbroken pressing members can be operated, unlike in the case where only one pressing member is provided. For this reason, the unbroken pressing members can reliably perform braking that acts against the rotation of the brake plate. In addition, the urging member that urges the multiple pressing members is provided so that the magnitudes of pressing forces of at least two of the plurality of pressing members are made to be different from each other. As a result, the pressing members of the electromagnetic brake have different probabilities of occurrence of defects (defect probability) such as wear. Thus, it is possible to effectively restrain all of the multiple pressing members from being broken concurrently. Thus, braking can be reliably performed against the rotation of the brake plate.

A rotating electrical machine according to a second aspect of the disclosure includes a rotor on which braking is performed, a stator that allows an electromagnetic force to be generated between the rotor and the stator, and an electromagnetic brake that performs braking against the rotation of the rotor. In the rotating electrical machine, the electromagnetic brake includes a brake plate that rotates along with the rotor on which braking is performed, a plurality of pressing members that press the brake plate when braking is performed on the brake plate, an urging member that urges the plurality of pressing members in such a manner that the brake plate is pressed, and an electromagnetic coil that moves the plurality of pressing members in a direction that is opposite to a direction of the urging force of the urging member when braking is not being performed on the brake plate. The urging member is provided to urge the plurality of pressing members in such a manner that the magnitudes of pressing forces of at least two of the plurality of pressing members are made to be different from each other.

As described above, the rotating electrical machine according to the second aspect includes multiple pressing members that press the brake plate so that braking is performed on the brake plate. Thus, even when one of the multiple pressing members is broken, the other unbroken pressing members can be operated, unlike in the case where only one pressing member is provided. For this reason, the unbroken pressing members can reliably perform braking that acts against the rotation of the brake plate, and thus braking can be reliably performed against the rotation of the rotor of the rotating electrical machine that is to be subjected to braking. In addition, the urging member of the electromagnetic brake that urges the multiple pressing members is provided so that the magnitudes of pressing forces of at least two of the plurality of pressing members are made to be different from each other. As a result, the pressing members of the electromagnetic brake have different probabilities of occurrence of defects (defect probability) such as wear. Thus, it is possible to effectively restrain all of the multiple pressing members from being broken concurrently. Thus, braking can be reliably performed against the rotation of the brake plate, as well as the rotation of the rotor of the rotating electrical machine.

An elevator according to a third aspect of the disclosure includes an elevator cage that allows a passenger and cargo to be loaded thereon, and a rotating electrical machine that vertically moves the elevator cage. In the elevator, the rotating electrical machine includes a rotor on which braking is performed, a stator that allows an electromagnetic force to be generated between the rotor and the stator, and an electromagnetic brake that performs braking against the rotation of the rotor. The electromagnetic brake includes a brake plate that rotates along with the rotor on which braking is performed, a plurality of pressing members that press the brake plate when braking is performed on the brake plate, an urging member that urges the plurality of pressing members in such a manner that the brake plate is pressed, and an electromagnetic coil that moves the plurality of pressing members in a direction that is opposite to a direction of the urging force of the urging member when braking is not being performed on the brake plate. The urging member is provided to urge the plurality of pressing members in such a manner that the magnitudes of pressing forces of at least two of the plurality of pressing members are made to be different from each other.

As described above, the elevator according to the third aspect includes multiple pressing members that press the brake plate so that braking is performed on the brake plate. Thus, even when one of the multiple pressing members is broken, the other unbroken pressing members can be operated, unlike in the case where only one pressing member is provided. For this reason, the unbroken pressing members can reliably perform braking that acts against the rotation of the brake plate, and thus braking can be reliably performed against the rotation of the rotor of the rotating electrical machine that is to be subjected to braking. Consequently, braking can be reliably performed against the vertical movement of the elevator cage. In addition, the urging member of the electromagnetic brake of the rotating electrical machine that urges the multiple pressing members is provided so that the magnitudes of pressing forces of at least two of the plurality of pressing members are made to be different from each other. As a result, the pressing members of the electromagnetic brake have different probabilities of occurrence of defects (defect probability) such as wear. Thus, it is possible to effectively restrain all of the multiple pressing members from being broken concurrently. Thus, braking can be reliably performed against the rotation of the brake plate as well as the rotation of the rotor of the rotating electrical machine that is to be subjected to braking. Consequently, braking can be reliably performed against the vertical movement of the elevator cage.

### BRIEF DESCRIPTION OF THE DRAWINGS

Fig. 1 illustrates an electromagnetic brake, a rotating electrical machine, and an elevator according to a first embodiment of the disclosure;

Fig. 2 illustrates the electromagnetic brake according to the first embodiment of the disclosure;

Fig. 3 is a front view of a pressing member of the electromagnetic brake according to the first embodiment of the disclosure;

Fig. 4 illustrates the electromagnetic brake illustrated in Fig. 2 in a state in which no braking is being performed;

Fig. 5 is a front view of a pressing member of an electromagnetic brake according to a second embodiment of the disclosure;

Fig. 6 is a front view of a pressing member of an electromagnetic brake according to a third embodiment of the disclosure;

Fig. 7 is a front view of a pressing member of an electromagnetic brake according to a fourth embodiment of the disclosure; and

Fig. 8 is a front view of a pressing member of an electromagnetic brake according to a fifth embodiment of the disclosure.

### DESCRIPTION OF THE EMBODIMENTS

Referring to the drawings, embodiments of the disclosure will be described below.

### First Embodiment

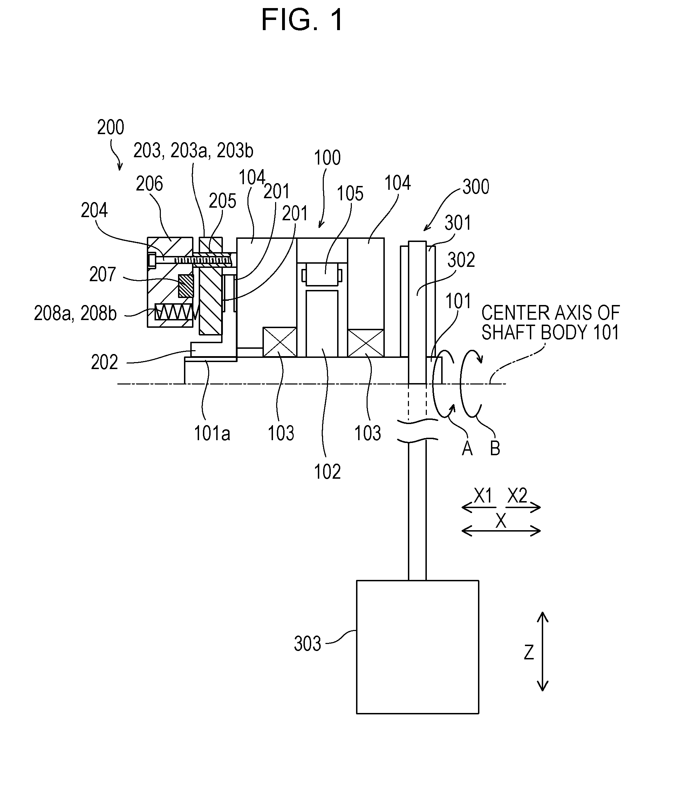

Referring to Fig. 1 to Fig. 3 first, a structure of an elevator 300 according to a first embodiment of the disclosure will be described.

As illustrated in Fig. 1, the elevator 300 according to the first embodiment of the disclosure includes a motor 100 and an electromagnetic brake 200 attached to the motor 100. The motor 100 includes a shaft body 101 that extends in an X direction and is rotatable in an A or B direction. The electromagnetic brake 200 is mounted on the shaft body 101 of the motor 100, near an end, in an arrow X1 direction, of the shaft body 101. Note that the motor 100 is an example of a "rotating electrical machine" according to the disclosure.

The elevator 300 also includes a sheave 301, a rope 302, and an elevator cage 303 for loading passengers and cargo. The sheave 301 is mounted on the shaft body 101 of the motor 100 near an end, in an arrow X2 direction, of the shaft body 101. The sheave 301 is rotated along with the shaft body 101 rotating in the A or B direction. The rope 302 is wound around the sheave 301. The elevator cage 303 is attached to a lower portion of the rope 302. When a torque generated by the motor 100 is transmitted to the elevator cage 303 via the sheave 301 and the rope 302, the elevator cage 303 is moved vertically (in the Z direction).

The motor 100 includes a rotor 102 mounted on the shaft body 101, two bearings 103 disposed so as to sandwich the rotor 102, a bracket 104 disposed so as to cover the rotor 102 and the bearings 103, and a stator 105 disposed on the inner surface of the bracket 104 so as to face the rotor 102. A spline portion 101a is formed on an end, in the arrow X1 direction, of the shaft body 101 so as to extend in the X direction. When a predetermined voltage is applied to a coil of the stator 105, an electromagnetic force is generated between the rotor 102 and the stator 105. The generated electromagnetic force drives the rotor 102 to rotate and thus the shaft body 101 is driven to rotate in the A or B direction.

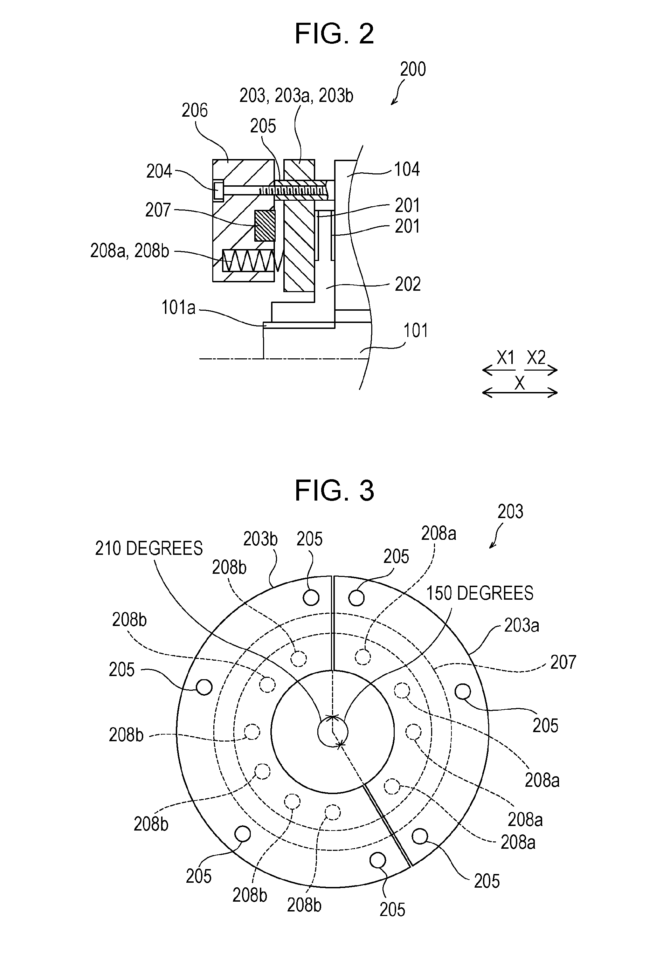

As illustrated in Fig. 2, the electromagnetic brake 200 includes a brake plate 202 to which brake shoes 201 are attached, a pressing member 203, a bolt 204, guides 205, and a field core 206 containing a soft magnetic material. An electromagnetic coil 207, compression coil springs 208a, and compression coil springs 208b are mounted in the field core 206. Here, the compression coil springs 208a (208b) are examples of "urging members" and "spring members" according to the disclosure.

The brake shoes 201 are made of a material with a high frictional resistance. The brake shoes 201 are attached to both surfaces of the brake plate 202. The pair of brake shoes 201 attached to both surfaces of the brake plate 202 are brought into contact with the bracket 104 and the pressing member 203 at the time of braking. The brake plate 202 is fitted into the spline portion 101a of the shaft body 101 so as to be movable in directions of arrows X1 and X2, and is driven to rotate along with the shaft body 101 being driven to rotate in the A or B direction. The brake plate 202 is interposed between the pressing member 203 and the bracket 104.

The pressing member 203 urges the brake plate 202 toward the bracket 104 (in the arrow X2 direction) with the urging forces that are exerted in the arrow X2 direction by the compression coil springs 208a and 208b mounted on the field core 206. In short, the pressing member 203 presses the brake plate 202 against the bracket 104 (in the arrow X2 direction). Since the brake plate 202 is interposed between the pressing member 203 and the bracket 104 as described above, the pair of brake shoes 201 attached to the brake plate 202 are brought into contact with the bracket 104 and the pressing member 203 and thus the brake plate 202 is subjected to braking that acts against the rotation.

In the first embodiment, the pressing member 203 includes two pressing members 203a and 203b, as illustrated in Fig. 3. When seen from the front (seen in an axial direction of the shaft body 101 or in the X direction), the two pressing members 203a and 203b are formed in such a manner that a single ring-shaped pressing member 203 is divided into sections along a radius of the pressing member 203, and are arranged together to form a ring.

The two pressing members 203a and 203b are formed in such a manner that the pressing member 203 is circumferentially divided into two sections (203a, 203b) that have different central angles. Specifically, the central angle of the pressing member 203a is approximately 150 degrees and the central angle of the pressing member 203b is approximately 210 degrees. Accordingly, the pressing area (surface area) of the pressing member 203a is smaller than the pressing area (surface area) of the pressing member 203b.

In the first embodiment, different numbers of compression coil springs 208a and 208b are disposed on the pressing members 203a and 203b so as to correspond to the pressing areas of the pressing members 203a and 203b, and thus the magnitudes of pressing forces of the pressing members 203a and 203b are made to be different from each other. Specifically, four compression coil springs 208a that urge the pressing member 203a are disposed at inner portions (portions on the center side) of the pressing member 203a. In addition, six compression coil springs 208b that urge the pressing member 203b are disposed at inner portions (portions on the center side) of the pressing member 203b. The compression coil springs 208a and 208b have the same spring constant. Accordingly, the magnitudes of pressing forces of the pressing members 203a and 203b are made to be different from each other, that is, the pressing force of the pressing member 203b is larger than the pressing force of the pressing member 203a by a magnitude that is equivalent to the pressing force generated by two compression coil springs 208b.

Three guides 205 are mounted on the outer side (in an annular area that is located further outward than an annular area where the compression coil springs 208a are disposed) of the pressing member 203a. In addition, four guides 205 are mounted on the outer side (in an annular area that is located further outward than an annular area where the compression coil springs 208b are disposed) of the pressing member 203b.

As illustrated in Fig. 2, the bolt 204 is provided to fix the guides 205 and the field core 206 to the bracket 104. The guides 205 guide the pressing member 203 to move in the X direction.

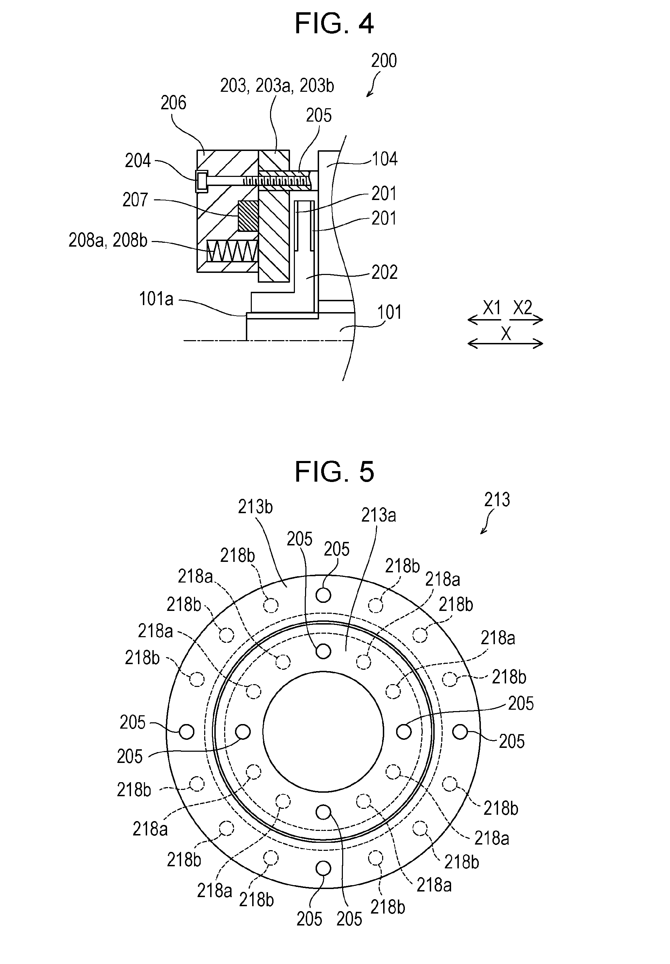

Referring now to Fig. 2 and Fig. 4, a description will be given of operations when braking is performed on the brake plate 202 and when braking is not performed on the brake plate 202.

As illustrated in Fig. 2, when braking is performed on the brake plate 202 (when a predetermined voltage is not applied to the electromagnetic coil 207), the two pressing members 203a and 203b almost concurrently press the brake plate 202 with the urging forces that are exerted in the arrow X2 direction by the compression coil springs 208a and 208b. Thus, the brake plate 202 is pressed against the bracket 104. At this time, the pressing member 203b has a larger pressing force than the pressing member 203a.

When the pressing members 203a and 203b press the brake plate 202, the pressing members 203a and 203b come into contact with the brake plate 202 (one brake shoe 201) and thus the brake plate 202 (the other brake shoe 201)
comes into contact with the bracket 104. Consequently, friction is caused between the brake plate 202 (one brake shoe 201) and the pressing members 203a and 203b, and between the brake plate 202 (the other brake shoe 201) and the bracket 104. With the friction, the rotation of the brake plate 202 is subjected to braking.

As illustrated in Fig. 4, when braking is not being performed on the brake plate 202, a predetermined voltage is applied to the electromagnetic coil 207 to cause the electromagnetic coil 207 to generate an electromagnetic force. Thus, the pressing members 203a and 203b are attracted and moved by the electromagnetic coil 207 (in the arrow X1 direction) against the elastic force of the compression coil springs 208. At this time, the one of the pressing members 203a and 203b that has a smaller pressing force is attracted by the electromagnetic coil 207 sooner than the other and moved in the arrow X1 direction. Thereafter, the other one of the pressing members 203a and 203b that has a larger pressing force is attracted by the electromagnetic coil 207 and moved in the arrow X1 direction. As a result, a gap is formed between the brake plate 202 and the pressing members 203a and 203b and thus the pressing force that the brake plate 202 has exerted on the bracket 104 is removed. Thus, the brake plate 202 attached to the shaft body 101 of the motor 100 can rotate freely.

As described above, two pressing members 203a and 203b that press the brake plate 202 to perform braking on the brake plate 202 are provided in the first embodiment. Thus, even when one of the pressing members 203a and 203b is broken, the other unbroken one of the pressing members 203a and 203b can be operated, unlike in the case where only one pressing member is provided. For this reason, braking can be reliably performed against the rotation of the brake plate 202 by the unbroken pressing member. In addition, the compression coil springs 208a and 208b that urge the pressing members 203a and 203b are disposed on the pressing members 203a and 203b in such a manner that the magnitudes of pressing forces of the pressing members 203a and 203b are made to be different from each other. As a result, the pressing members 203a and 203b of the electromagnetic brake 200 can have different probabilities of occurrence of defects (defect probability) such as wear. Thus, it is possible to effectively restrain both the two pressing members 203a and 203b from being broken concurrently. Since braking can be reliably performed against the rotation of the brake plate 202 in this manner, braking can be also reliably performed against the rotation of the rotor 102 of the motor 101 that is to be subjected to braking. Consequently, braking can be reliably performed against the vertical movement of the elevator cage 303.

In the first embodiment, as described above, the magnitudes of the pressing forces of the two pressing members 203a and 203b are made to be different from each other by using the compression coil springs 208a and 208b that have the same spring constant and by making magnitudes of urging forces of the compression coil springs 208a and 208b that are to be exerted on the pressing members 203a and 203b to be different from each other. As a result, the electromagnetic brake 200 includes fewer types of components than in the case where compression coil springs that have different spring constants are used.

In the first embodiment, the two pressing members 203a and 203b have different sizes of pressing areas as described above. Thus, the magnitudes of pressing forces of the two pressing members 203a and 203b are made to be different from each other according to the pressing areas.

As described above, in the first embodiment, the two pressing members 203a and 203b are formed in such a manner that the pressing member 203 is circumferentially divided into two sections (203a and 203b) that have different central angles. Moreover, by annularly arranging the two pressing members 203a and 203b, the magnitudes of pressing forces of the two pressing members 203a and 203b are made to be different from each other according to the different central angles of the two annularly arranged sections (203a and 203b).

As described above, in the first embodiment, different numbers of compression coil springs 208a and 208b that have the same spring constant are disposed on the two sections (203a and 203b), which are annularly arranged, so as to correspond to the different pressing areas of the two sections. Thus, the magnitudes of pressing forces of the two sections (203a and 203b) can easily be made to be different from each other.

The timing at which each of the pressing members 203a and 203b comes into contact with the brake plate 202 (one brake shoe 201) can be changed by appropriately adjusting the spring constant of the compression coil springs 208a and 208b, the number of compression coil springs 208a and 208b, or the mass of the pressing members 203a and 203b, while the condition is satisfied that the magnitudes of pressing forces of the two pressing members 203a and 203b are made to be different from each other after these adjustments. This timing change brings about an effect of reducing the time in which the pressing members 203a and 203b concurrently perform braking that acts against the rotation of the brake plate 202. When the pressing members 203a and 203b come into contact with the brake plate 202 (one brake shoe 201) at different timings, the braking force can be exerted in multiple steps (two steps in the first embodiment). This is advantageous because braking can be performed more smoothly against the rotation of the brake plate 202, and the impact and braking noise generated at the time of braking can be reduced. Note that the spring constant of the compression coil springs 208a may be made to be different from that of the compression coil springs 208b in these adjustments.

### Second Embodiment

Referring now to Fig. 5, a second embodiment according to the disclosure will be described. In the second embodiment, two pressing members 213a and 213b have ring shapes with different radii and are concentrically arranged, unlike in the first embodiment where the two pressing members 203a and 203b are arranged annularly.

As illustrated in Fig. 5, a pressing member 213 according to the second embodiment includes two pressing members 213a and 213b with different radii, that is, an inner pressing member 213a and an outer pressing member 213b. Each of the two pressing members 213a and 213b has a ring (circle) shape when seen from the front (when seen in the axial direction of the shaft body 101 or in the X direction). The pressing members 213a and 213b are concentrically arranged so that the centers thereof almost coincide with each other. The pressing member 213a has a smaller radius than the pressing member 213b. Further, the pressing member 213a has a smaller pressing area than the pressing member 213b.

In the second embodiment, eight compression coil springs 218a that urge the inner pressing member 213a are disposed on the inner pressing member 213a around the almost whole circumference of the inner pressing member 213a. Moreover, twelve compression coil springs 218b that urge the outer pressing member 213b are disposed on the outer pressing member 213b around the almost whole circumference of the outer pressing member 213b. Here, the compression coil springs 218a (218b) are examples of "urging members"
and "spring members" according to the disclosure. The number (twelve) of compression coil springs 218b disposed on the pressing member 213b is set to be larger than the number (eight) of compression coil springs 218a disposed on the pressing member 213a. Different numbers of compression coil springs 218a and 218b are thus disposed on the pressing members 213a and 213b so as to correspond to the pressing areas of the pressing members 213a and 213b. The compression coil springs 218a and 218b have the same spring constant.

Four guides 205 are mounted on the pressing member 213a at intervals of 90 degrees. Moreover, four guides 205 are mounted on the pressing member 213b at intervals of 90 degrees. In other respects, the configuration and the operation in the second embodiment are similar to those in the first embodiment.

In the second embodiment, as described above, the pressing force of the pressing member 213b can be made to be different from that of the pressing member 213a by using the compressing coils springs 218a and 218b that have the same spring constant, and by disposing a larger number (twelve) of compression coil springs 218b on the pressing member 213b than the number (eight) of compression coil springs 218a disposed on the pressing member 213a. As a result, the pressing members 213a and 213b are allowed to have different probabilities of occurrence of defects (defect probability) such as wear.

Other effects related to the second embodiment are similar to those related to the first embodiment.

### Third Embodiment

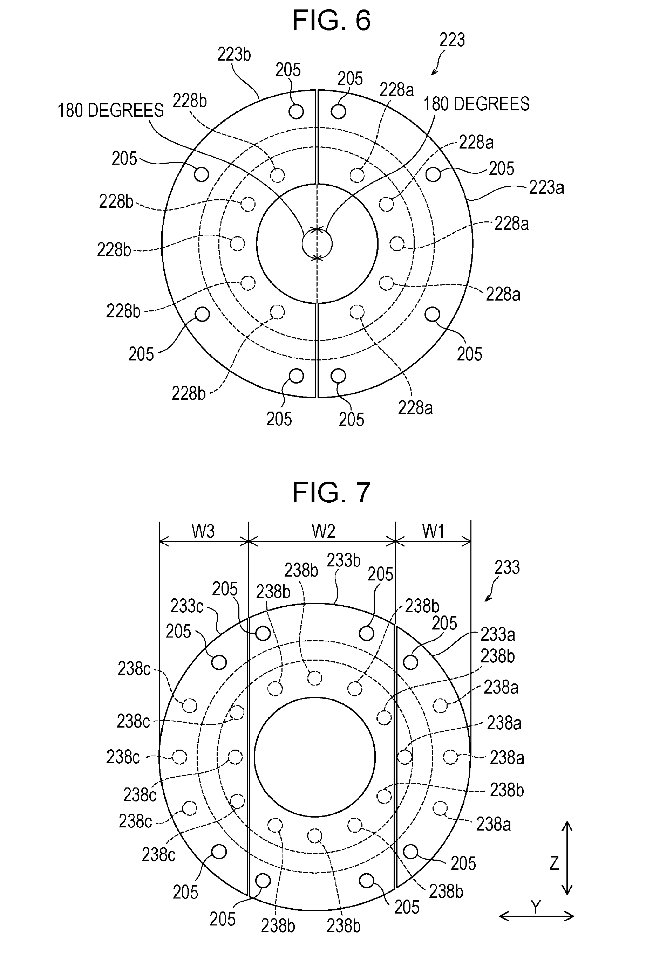

Referring now to Fig. 6, a third embodiment of the disclosure will be described. In the third embodiment, a pressing member 223a and a pressing member 223b have almost the same pressing area, unlike in the first embodiment where the pressing members 203a and 203b have pressing areas that are different from one another. In addition, compression coil springs 228a and compression coil springs 228b are used and the compression coil springs 228a have the spring constant that is different from the spring constant of the compression coil springs 228b.

In the third embodiment, as illustrated in Fig. 6, the pressing member 223 includes two pressing members 223a and 223b. The two pressing members 223a and 223b are arranged so as to form a ring when seen from the front (when seen in the axial direction of the shaft body 101 or in the X direction).

The two pressing members 223a and 223b are formed in such a manner that the pressing member 223 is circumferentially divided into two sections (223a and 223b) that have the same central angle. Specifically, the two pressing members 223a and 223b both have the central angle of approximately 180 degrees and thus are symmetric. Accordingly, the pressing area of the pressing member 223a is almost the same as that of the pressing member 223b.

Five compression coil springs 228a that urge the pressing member 223a are disposed on the inner side (center side) of the pressing member 223a. Moreover, five compression coil springs 228b that urge the pressing member 223b are disposed on the inner side (center side) of the pressing member 223b. Here, the compression coil springs 228a (228b) are examples of "urging members" and "spring members" according to the disclosure. In other words, the number of compression coil springs 228a disposed on the pressing member 223a is the same as the number of compression coil springs 228b disposed on the pressing member 223b.

In the third embodiment, the spring constant of the compression coil springs 228a is different from the spring constant of the compression coil springs 228b. In other words, the magnitude of the pressing force of the pressing member 223a is made to be different from that of the pressing member 223b by making the magnitude of the urging force of the compression coil springs 228a to be different from that of the compression coil springs 228b.

In addition, four guides 205 are mounted on the outer side (in an annular area that is located further outward than an annular area where the compression coil springs 228a are disposed) of the pressing member 223a. Moreover, four guides 205 are mounted on the outer side (in an annular area that is located further outward than an annular area where the compression coil springs 228b are disposed) of the pressing member 223b. In other respects, the configuration and operation in the third embodiment are similar to those in the first embodiment.

In the third embodiment, as described above, the compression coil springs 228a and 228b that have different spring constants are used and the same number (five) of compression coil springs 228a and 228b are disposed on each of the pressing members 223a and 223b. Thus, the magnitudes of pressing forces of the pressing members 223a and 223b can easily be made different from each other. Moreover, since the pressing members 203a and 203b come into contact with the brake plate 202 (one brake shoe 201) at different timings, the braking force can be exerted in multiple steps (two steps in the third embodiment). This is advantageous because braking can be more smoothly performed against the rotation of the brake plate 202, and the impact and braking noise generated at the time of braking can be reduced.

Other effects related to the third embodiment are similar to those related to the first embodiment.

### Fourth Embodiment

Referring now to Fig. 7, a fourth embodiment will be described. In the fourth embodiment, three pressing members 233a, 233b, and 233c are provided, unlike in the first embodiment where the two pressing members 203a and 203b are provided.

In the fourth embodiment, as illustrated in Fig. 7, the pressing member 233 is formed in such a shape that a single ring-shaped (annular) pressing member is divided into three sections in the Z direction. The pressing members 233a, 233b, and 233c have different widths, i.e., different dimensions in the Y direction.

The Y-direction width W1 of the pressing member 233a is smaller than the Y-direction width W2 of pressing member 233b and the Y-direction width W3 of the pressing member 233c. In addition, the Y-direction width W2 of the pressing member 233b is larger than the Y-direction width W3 of the pressing member 233c. As a result, the pressing member 223b has the largest pressing area, the pressing member 223c has the intermediate pressing area, and the pressing member 223a has the smallest pressing area.

In the fourth embodiment, four compression coil springs 238a that urge the pressing member 233a are disposed on the pressing member 233a. Eight compression coil springs 238b that urge the pressing member 233b are disposed on the pressing member 233b. Six compression coil springs 238c that urge the pressing member 233c are disposed on the pressing member 233c. In other words, different numbers of compression coil springs 238a, compression coil springs 238b, and compression coil springs 238c are disposed on the pressing member 233a, the pressing member 233b, and the pressing member 233c so as to correspond to the different pressing areas of the pressing members 233a, 233b, and 233c. Here, the compression coil springs 238a, 238b, and 238c have the same spring constant. Note that the compression coil springs 238a (238b and 238c) are examples of "urging members" and "spring members" according to the disclosure.

Two guides 205 are mounted on the outer sides (in an annular area that is located further outward than an annular area where the compression coil springs 238b are disposed) of the pressing member 233a. Four guides 205 are mounted on the outer sides (in an annular area that is located further outward than an annular area where the compression coil springs 238b are disposed) of the pressing member 233b. Two guides 205 are mounted on the outer sides (in an annular area that is located further outward than an annular area where the compression coil springs 238b are disposed) of the pressing member 233c. Even when one of the pressing members 233a, 233b, and 233c fails to operate due to a defect of one of the guides 205, two pressing members that have the remaining normally operable guides 205 mounted thereon can operate other than the pressing member with the broken guide 205. Thus, even in the case where one of the multiple guides 205 is broken, braking can be performed by using the pressing members that are guided by the remaining normally operable guides 205. In other respects, the configuration and operation of the fourth embodiment are similar to those of the first embodiment.

In the fourth embodiment, as described above, all of the three pressing members 233a, 233b, and 233c are allowed to have different probabilities of occurrence of defects (defect probabilities) such as wear by using the compression coil springs 238a, 238b, and 238c that have the same spring constant and by making the magnitudes of urging forces of the compression coil springs 238a, 238b, and 238c that are to be exerted on the three corresponding pressing members 233a, 233b, and 233c different from one another. Thus, it is possible to restrain all of the three pressing members 233a, 233b, and 233c from being broken concurrently.

Other effects related to the fourth embodiment are similar to those related to the first embodiment.

### Fifth Embodiment

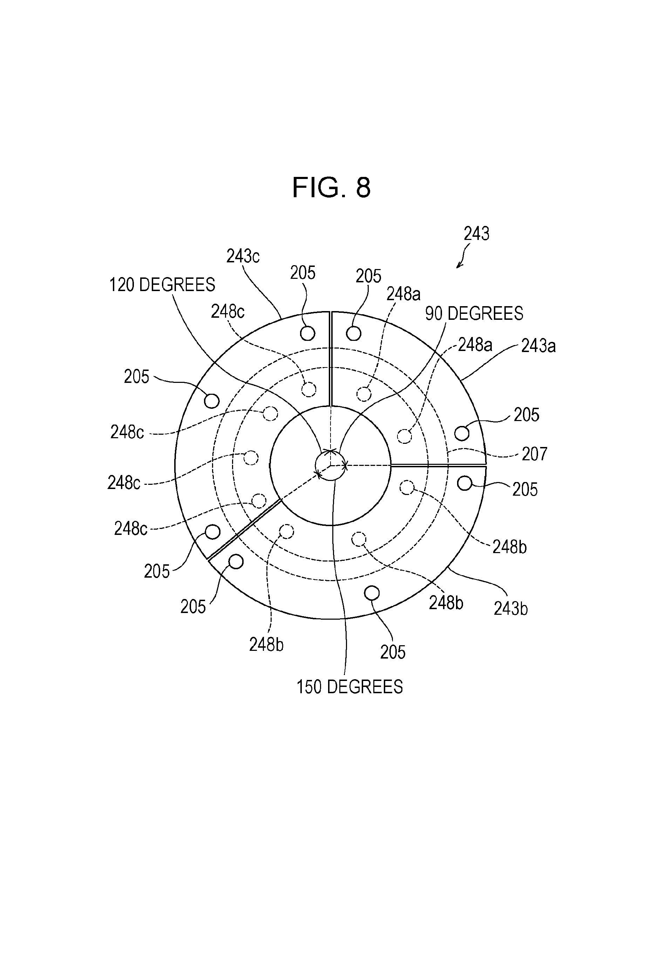

Referring now to Fig. 8, a fifth embodiment of the disclosure will be described. In the fifth embodiment, three pressing members 243a, 243b, and 243c are arranged annularly, unlike in the first embodiment where the two pressing members 203a and 203b are arranged annularly.

In the fifth embodiment, as illustrated in Fig. 8, the pressing member 243 includes three pressing members 243a, 243b, and 243c. The three pressing members 243a, 243b, and 243c are arranged to form a ring when seen from the front (when seen in the axial direction of the shaft body 101 or in the X direction).

The three pressing members 243a, 243b, and 243c are formed in such a manner that the pressing member 243 is circumferentially divided into three sections (243a, 243b, and 243c) that have different central angles. Specifically, the central angle of the pressing member 243a is approximately 90 degrees. The central angle of the pressing member 243b is approximately 150 degrees. The central angle of the pressing member 243c is approximately 120 degrees. Accordingly, the pressing area (surface area) of the pressing member 243a is smaller than the pressing areas (surface areas) of the pressing members 243b and 243c. Further, the pressing area of the pressing member 243b is larger than the pressing area of the pressing member 243c.

Two compression coil springs 248a that urge the pressing member 243a are disposed on the inner side (center side) of the pressing member 243a. Three compression coil springs 248b that urge the pressing member 243b are disposed on the inner side (center side) of the pressing member 243b. Four compression coil springs 248c that urge the pressing member 243c are disposed on the inner side (center side) of the pressing member 243c. In other words, different numbers of compression coil springs 248a, compression coil springs 248b, and compression coil springs 248c are disposed on the pressing members 243a, 243b, and 243c so as to correspond to the pressing areas of the pressing members 243a, 243b, and 243c. The compression coil springs 248a, 248b, and 248c have the same spring constant. Thus, the magnitudes of pressing forces of the pressing members 243a, 243b, and 243c are made to be different from one another. Specifically, the pressing force of the pressing member 243b is larger than that of the pressing member 243a by a magnitude that is equivalent to one compression coil spring 248b. The pressing force of the pressing member 243c is larger than that of the pressing member 243b by a magnitude that is equivalent to one compression coil spring 248c. The pressing force of the pressing member 243c is larger than that of the pressing member 243a by a magnitude that is equivalent to two compression coil springs 248c. Note that the compression coil springs 248a (248b and 248c) are examples of "urging members" and "spring members" according to the disclosure.

Two guides 205 are mounted on the outer side (in an annular area that is located further outward than an annular area where the compression coil springs 248a are disposed) of the pressing member 243a. Three guides 205 are mounted on the outer side (in an annular area that is located further outward than an annular area where the compression coil springs 248b are disposed) of the pressing member 243b. Three guides 205 are mounted on the outer side (in an annular area that is located further outward than an annular area where the compression coil springs 248c are disposed) of the pressing member 243c. Even when one of the pressing members 243a, 243b, and 243c fails to operate due to a defect of one of the guides 205, two pressing members that have normally operable guides mounted thereon can operate other than the pressing member with the broken guide 205. Thus, even in the case where one of the multiple guides 205 is broken, braking can be performed by using the pressing members that are guided by the remaining normally operable guides 205. In other respects, the configuration of the fifth embodiment is similar to that of the first embodiment.

In the fifth embodiment, as described above, the magnitudes of pressing forces of the three pressing members 243a, 243b, and 243c are made to be different from one another by using the compression coil springs 248a, 248b, and 248c that have the same spring constant and by making the magnitudes of urging forces of the compression coil springs 248a, 248b, and 248c that are to be exerted on the three corresponding pressing members 243a, 243b, and 243c to be different from one another. Thus, all of the three pressing members 243a, 243b, and 243c are allowed to have different probabilities of occurrence of defects such as wear, and it is possible to restrain all of the three pressing members 243a, 243b, and 243c from being broken concurrently.

Other effects related to the fifth embodiment are similar to those of the first embodiment.

The embodiments disclosed herein are merely for illustrative purposes in all respects and thus should not be construed as restrictive. The scope of the disclosure is defined by the scope of claims, not by the above description of the embodiments. Furthermore, the scope of the disclosure includes all of the modifications within the spirit and scope equivalent to the scope of claims.

For example, in each of the first to fifth embodiments, the case is described where two or three pressing members are provided. However, the disclosure is not limited thereto. For example, four or more pressing members may be provided.

In each of the first to fifth embodiments, the case is described where compression coil springs are examples of the urging members according to the disclosure. However, the disclosure is not limited thereto. Any urging member that can urge the pressing member may be employed in the disclosure instead of compression coil springs.

In each of the first to fifth embodiments, the case is described where the pressing members form a ring when seen in the axial direction. However, the disclosure is not limited thereto. For example, the pressing members may form a square or triangular shape instead of a ring.

In each of the first to fifth embodiments, the case is described where the rotating electrical machine according to the disclosure is employed as a motor used for an elevator. However, the disclosure is not limited thereto. In the disclosure, the rotating electrical machine may be a motor for devices instead of an elevator, or may be a power generator.

In each of the first, third, and fifth embodiments, the case is described where compression coil springs are disposed on the inner side of the corresponding pressing member. However, the disclosure is not limited thereto.
For example, compression coil springs may be disposed on the outer side of the corresponding pressing member or on both the inner and outer sides of the corresponding pressing member.

In the second embodiment, the case is described where two pressing members with different radii are concentrically arranged. However, the disclosure is not limited thereto. For example, three or more pressing members with different radii may be concentrically arranged.

In the fifth embodiment, the case is described where three pressing members that have different central angles are provided. However, the disclosure is not limited thereto. For example, four or more pressing members that have different central angles may be provided.

It should be understood by those skilled in the art that various modifications, combinations, subcombinations, and alterations may occur depending on design requirements and other factors insofar as they are within the scope of the appended claims or the equivalents thereof.

## Claims

1. An electromagnetic brake (200) **characterized by** comprising:
a brake plate (202) that rotates along with a rotor on which braking is performed;
a plurality of pressing members (203a, 203b, 213a, 213b, 223a, 223b, 233a, 233b, 233c, 243a, 243b, 243c) that press the brake plate (202) when braking is being performed on the brake plate (202);
an urging member that urges the plurality of pressing members (203a, 203b, 213a, 213b, 223a, 223b, 233a, 233b, 233c, 243a, 243b, 243c) in such a manner that the brake plate (202) is pressed; and
an electromagnetic coil (207) that moves the plurality of pressing members (203a, 203b, 213a, 213b, 223a, 223b, 233a, 233b, 233c, 243a, 243b, 243c) in a direction that is opposite to a direction of an urging force of the urging member when braking is not being performed on the brake plate (202), wherein
the urging member is provided to urge the plurality of pressing members (203a, 203b, 213a, 213b, 223a, 223b, 233a, 233b, 233c, 243a, 243b, 243c) in such a manner that the magnitudes of pressing forces of at least two of the plurality of pressing members (203a, 203b, 213a, 213b, 223a, 223b, 233a, 233b, 233c, 243a, 243b, 243c) are made to be different from each other.

2. The electromagnetic brake according to Claim 1, **characterized in that**
the urging member includes spring members; and
the magnitudes of pressing forces of the at least two of the pressing members are made to be different from each other by using the spring members that have the same spring constant or different spring constants and by making the magnitudes of urging forces that the spring members are to exert on the at least two of the pressing members to be different from each other.

3. The electromagnetic brake according to Claim 2, **characterized in that** the plurality of pressing members have pressing areas that are different from one another.

4. The electromagnetic brake according to Claim 3, **characterized in that** the plurality of pressing members are formed by dividing a ring-shaped body into a plurality of sections with different central angles, and are arranged annularly.

5. The electromagnetic brake according to Claim 4, **characterized in that** different numbers of spring members that have the same spring constant are disposed on the plurality of annularly arranged sections so as to correspond to different pressing areas of the plurality of sections.

6. The electromagnetic brake according to Claim 3, **characterized in that**
the spring members that have the same spring constant are disposed on the plurality of pressing members that are annular, that have different radii, and that are arranged concentrically, and
the number of spring members disposed on one of the plurality of concentrically arranged pressing members that is arranged further outward than the others is larger than the number of spring members that are disposed on another one of the plurality of concentrically arranged pressing members that is arranged further inward than the others, and the spring members having the same spring constant.

7. The electromagnetic brake according to Claim 2, **characterized in that** the same number of spring members are disposed on each of the plurality of pressing members, the spring constant of the spring members provided to each single pressing member being different from the spring constant of the spring members provided to other ones of the pressing members.

8. The electromagnetic brake according to Claim 7, **characterized in that**
the plurality of pressing members have approximately the same pressing area, and
the same number of spring members are disposed on each of the plurality of pressing members, the spring constant of the spring members provided to each single pressing member being different from the spring constant of the spring members provided to other ones of the pressing members.

9. The electromagnetic brake according to Claim 8, **characterized in that**
the plurality of pressing members include an annular pressing member,
the annular pressing member is circumferentially divided into a plurality of sections that have approximately the same central angle, and
the same number of spring members are disposed on each of the plurality of sections, the spring constant of the spring members provided to each single section being different from the spring constant of the spring members provided to other ones of the sections.

10. The electromagnetic brake according to Claim 2, **characterized in that** the magnitudes of pressing forces of at least three of the pressing members are made to be different from one another by using the spring members that have the same spring constant or different spring constants and by making the magnitudes of urging forces that the spring members are to exert on the at least three of the pressing members to be different from one another.

11. A rotating electrical machine (100) **characterized by** comprising:
a rotor (102) on which braking is performed;
a stator (105) that allows an electromagnetic force to be generated between the rotor (102) and the stator (105); and
an electromagnetic brake (200) that performs braking against the rotation of the rotor (102), wherein
the electromagnetic brake (200) includes
a brake plate (202) that rotates along with the rotor (102) on which braking is performed,
a plurality of pressing members (203a, 203b, 213a, 213b, 223a, 223b, 233a, 233b, 233c, 243a, 243b, 243c) that press the brake plate (202) when braking is performed on the brake plate (202),
an urging member that urges the plurality of pressing members (203a, 203b, 213a, 213b, 223a, 223b, 233a, 233b, 233c, 243a, 243b, 243c) in such a manner that the brake plate (202) is pressed, and
an electromagnetic coil (207) that moves the plurality of pressing members (203a, 203b, 213a, 213b, 223a, 223b, 233a, 233b, 233c, 243a, 243b, 243c) in a direction that is opposite to a direction of an urging force of the urging member when braking is not being performed on the brake plate (202), and
the urging member is provided to urge the plurality of pressing members (203a, 203b, 213a, 213b, 223a, 223b, 233a, 233b, 233c, 243a, 243b, 243c) in such a manner that the magnitudes of pressing forces of at least two of the plurality of pressing members (203a, 203b, 213a, 213b, 223a, 223b, 233a, 233b, 233c, 243a, 243b, 243c) are made to be different from each other.

12. An elevator (300) **characterized by** comprising:
an elevator cage (303) that allows a passenger and cargo to be loaded thereon; and
a rotating electrical machine (100) that vertically moves the elevator cage (303), wherein
the rotating electrical machine (100) includes
a rotor (102) on which braking is performed,
a stator (105) that allows an electromagnetic force to be generated between the rotor (102) and the stator (105), and
an electromagnetic brake (200) that performs braking against the rotation of the rotor (102),
the electromagnetic brake (200) includes
a brake plate (202) that rotates along with the rotor (102) on which braking is performed,
a plurality of pressing members (203a, 203b, 213a, 213b, 223a, 223b, 233a, 233b, 233c, 243a, 243b, 243c) that press the brake plate (202) when braking is performed on the brake plate (202),
an urging member that urges the plurality of pressing members (203a, 203b, 213a, 213b, 223a, 223b, 233a, 233b, 233c, 243a, 243b, 243c) in such a manner that the brake plate (202) is pressed, and
an electromagnetic coil (207) that moves the plurality of pressing members (203a, 203b, 213a, 213b, 223a, 223b, 233a, 233b, 233c, 243a, 243b, 243c) in a direction that is opposite to a direction of an urging force of the urging member when braking is not being performed on the brake plate (202), and
the urging member is provided to urge the plurality of pressing members (203a, 203b, 213a, 213b, 223a, 223b, 233a, 233b, 233c, 243a, 243b, 243c) in such a manner that the magnitudes of pressing forces of at least two of the plurality of pressing members (203a, 203b, 213a, 213b, 223a, 223b, 233a, 233b, 233c, 243a, 243b, 243c) are made to be different from each other.
